(19) Europäisches Patentamt
European Patent Office
Office européen des brevets

(11) Veröffentlichungsnummer: **0 128 295**
**B1**

(12) # EUROPÄISCHE PATENTSCHRIFT

(45) Veröffentlichungstag der Patentschrift: **02.09.87**

(51) Int. Cl.⁴: **C 08 B 31/00**

(21) Anmeldenummer: **84103872.2**

(22) Anmeldetag: **07.04.84**

(54) **Verfahren zur Modifizierung von Stärke in Gegenwart von Lösungsmitteln.**

(30) Priorität: **05.05.83 DE 3316395**

(43) Veröffentlichungstag der Anmeldung: **19.12.84 Patentblatt 84/51**

(45) Bekanntmachung des Hinweises auf die Patenterteilung: **02.09.87 Patentblatt 87/36**

(84) Benannte Vertragsstaaten: **BE CH DE FR GB LI NL SE**

(56) Entgegenhaltungen:
**US-A-3 071 492**

**INDUSTRIAL AND ENGINEERING CHEMISTRY, Band 45, Nr. 11, November 1953, Seiten 2542-4; R.W. KERR u.a.: "Substituted silyl derivatives of starch"**
**M.G. VORONKOV u.a.: *"The siloxane bond"*, 1980, Seiten 340-347, Consultants Bureau, New York und London;**

(73) Patentinhaber: **DYNAMIT NOBEL AKTIENGESELLSCHAFT, Postfach 1209, D-5210 Troisdorf, Bez. Köln (DE)**

(72) Erfinder: **Amort, Jürgen, Dr., Ubierstrasse 9, D-5210 Troisdorf- Sieglar (DE)**
Erfinder: **Hanisch, Horst, Dr., Fröbelweg 19, D-5202 Hennef/Sieg (DE)**
Erfinder: **Klapdor, Ute, Zum alten Tor 11, D-5210 Troisdorf (DE)**
Erfinder: **van der Maas, Hendrikus, De Boogerd 25, NL- 5305 CK Zuilichem (NL)**
Erfinder: **Suerken, Hans- Peter, Kloosterwiel 9, NL-5301 WH Zaltbommel (NL)**

**EP 0 128 295 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der vorliegenden Erfindung ist ein Verfahren zur Modifizierung von Stärke in Gegenwart von organischen Lösungsmitteln. Die gemäß dem Verfahren erhaltene modifiziert Stärke enthält das Organosilan gebunden und kann direkt für bekannte Anwendungszwecke eingesetzt werden.

Es ist z. B. aus der US-A- 33 98 015 bekannt, selbsttragend Filme aus Amylose herzustellen und die Eigenschaften dieser Filme durch Behandlung mit Alkylchlorsilanen zu verbessern.

Weiterhin ist es bekannt, Stärke als Füllstoff in Polymere einzusetzen, z. B. bei Urethanharzen (siehe z. B. EP-A1- 00 58 921). Auch bei anderen Thermoplasten, z. B. Polyolefinen, oder auch Elastomeren ist Stärke als Füllstoff bekannt (vgl. Shell Polymers, Vol. 5, No. 3 (1981), S. 73 bis 78). Für die Verwendung als Füllstoff werden auch Stärkederivate, wie z. B. die Ether oder Ester, eingesetzt. Es ist auch vorgeschlagen worden, mit Silikonen derivatisierte Stärke als Füllstoffe einzusetzen; doch wird in diesem Fall die Stärke lediglich mit dem Silikon gemischt, so daß nur ein Gemisch von Stärke und Silikon vorliegt, in dem das Silikon nicht an die Stärke gebunden ist.

Beim Einsatz von Stärke als Füllstoff soll die Stärke sowohl eine oleophile Oberfläche als auch reaktive Zentren besitzen, die das Einarbeiten in das Polymere und die Haftung mit dem Polymeren verbessern. Zu diesem Zwecke werden bereits organofunktionelle Alkoxysilane als Haftvermittler zwischen Polymeren und anorganischen Füllstoffen eingesetzt, wobei die Füllstoffe auch als modifizierte Füllstoffe eingesetzt werden können. Die Modifikation erfolgt dabei in der Weise, daß die Füllstoffe mit dem organofunktionellen Alkoxysilan zur Reaktion gebracht werden, indem der Füllstoff mit dem Silan direkt, oder in einem Lösungsmittel gelöst, in Kontakt gebracht wird. Zusätzliche Reaktionsvermittler oder Katalysatoren sind bei dieser Reaktion nicht notwendig.

Wenn man nun in Analogie zu dieser bekannten Modifizierung von anorganischen Füllstoffen für Polymere versucht, Stärke im wäßrigen Medium in dieser Weise mit organofunktionellen Alkoxysilanen oder mit Alkylalkoxysilanen zu modifizieren, erhält man nicht die gewünschten Resultate: Die in wäßrigen Lösungen vorliegenden Alkoxysilane reagieren nicht mit Stärke; eine Modifikation der Stärke tritt nicht ein; es bleibt lediglich das im Lösungsmittel enthaltene Organosilan oberflächlich an der Stärke haften. Dieses Verhalten zeigen sowohl organofunktionelle als auch Alkylalkoxysilan.

Es ist zwar bekannt, daß siliciumfunktionelle Silane mit Stärke reagieren, wie z. B. Trialkylhalogensilane oder Chloralkoxysilane. Bei dieser Umsetzung reagiert jedoch die funktionelle Gruppe mit der Stärke, so daß ein Stärkederivat entsteht, das im Molekül keine funktionelle Gruppe für die Reaktion mit einem Polymeren zur Verfügung hat.

Es bestand deshalb aufgrund der von der Praxis gebotenen Forderung, Stärke zu modifizieren, die Aufgabe, ein Verfahren zu finden, Alkylalkoxysilane oder organofunktionelle Alkoxysilane so auf Stärke zu fixieren, daß die funktionelle Gruppe für weitere Reaktionen zur Verfügung steht. Die Stärke soll dann reaktive Zentren besitzen, die, z. B. aufgrund der organofunktionellen Reste bei organofunktionellen Silanen, mit funktionellen Gruppen von Polymeren in an sich bekannter Weise reagieren können oder die die Stärke, z. B. aufgrund der Alkylreste von Organosilanen, besonders stark hydrophob werden lassen, wodurch sich eine gute Dispergierbarkeit und gleichmäßige Verteilung der Stärke in Polymeren ergibt.

In Erfüllung dieser Aufgabe wurde nun ein Verfahren zur Modifizierung von Stärke mit Organosilanen gefunden, das dadurch gekennzeichnet ist, daß man Stärke in einen organischen Lösungsmittel in innigen Kontakt mit einem Organosilan in Gegenwart von Metallsäureestern von Metallen der 4. und 5. Nebengruppen des periodischen Systems bringt.

Praktischerweise geht man bei der Durchführung des erfindungsgemäßen Verfahrens so vor, daß man das Organosilan und den Metallsäureester in dem Lösungsmittel löst, in dieser Lösung die Stärke suspendiert und dann dafür sorgt, daß die Stärke in steter Bewegung gehalten wird. Vorzugsweise, wird die Suspension gerührt, wobei die Rührzeit und Rührgeschwindigkeit unter anderem von der Größe des Ansatzes, der Form des Gefäßes und der Art der Rührer abhängen. Im allgemeinen hat nach einer Rührzeit von etwa 2 Stunden die dem Ansatz entsprechende Menge Silan mit der Stärke unter Bildung des Stärkederivats reagiert.

Die Aufarbeitung des erfindungsgemäß erhaltenen Stärkederivats erfolgt nach an sich bekannten Methoden durch Abtrennen der Stärke und ggf. anschließenden Waschen mit dem Lösungsmittel und Trocknen. Sofern keine Verunreinigungen während des Verfahrens eingeschleppt werden, kann ein Waschprozeß auch entfallen. Der Nachweis, daß die Stärke mit dem Organosilan reagiert hat, erfolgt im allgemeinen über eine Si-Gehaltsbestimmung. Dabei wird davon ausgegangen, daß theoretisch maximal pro freier Hydroxylgruppe der Stärke ein Mol Organosilan reagieren kann. In der Praxis genügen aber weit geringere Mengen an Organosilan, um der Stärke die oben genannten Eigenschaften zu verleihen. Wie bei anderen Stärkederivaten wird praktischerweise auch hier die mit der Stärke reagierte Menge an Organosilan durch den Substitutionsgrad DS (degree of substitution) festgelegt. Dieser Substitutionsgrad sollte mindestens bei 0,001 liegen. Gute Ergebnisse werden bereits ab einem Substitutionsgrad von 0,003 erreicht. Nach dem erfindungsgemäßen Verfahren lassen sich auch beträchtlich höhere Substitutionsgrade erreichen, jedoch kann dann die Silanausbeute geringer sein.

Für die Reaktion zwischen der Stärke und dem Organosilan werden vorzugsweise verdünnte Lösungen der Organosilane eingesetzt. Bereits aus 0,1 %igen Lösungen reagiert das Organosilan mit der Stärke; konzentriertere Lösungen lassen sich ebenfalls einsetzen, jedoch kann beim Einsatz hochkonzentrierter Lösungen eine prozentual geringere Menge des Silans mit der Stärke als bei den verdünnten Lösungen

reagieren.

Die Herstellung der Organosilanlösungen erfolgt auf an sich bekannte Weise. Die dem gewünschten Substitutionsgrad entsprechende berechnete Menge des Silans wird in das Lösungsmittel eingerührt, wobei die gewünschten Lösungen entstehen. In die klare Lösung des Organosilans wird dann der Metallsäureester eingerührt. Im allgemeinen ist der Metallsäureester ebenfalls in den einsetzbaren organiachen Lösungsmitteln löslich, so daß eine homogene Lösung erhalten wird. In diese Lösung wird die Stärke dann suspendiert. Die Menge des Lösungsmittels sollte dabei so gewählt werden daß eine gut rührbare Suspension entsteht.

Die Umsetzung zwischen dem Organosilan und der Stärke erfolgt bereits bei Raumtemperatur.

Die Reaktion kann aber auch bei erhöhten Temperaturen durchgeführt werden.

Die Modifikation der Stärke durch Organosilane erfolgt erfindungsgemäß sowohl mit nativer als auch mit derivatisierter Stärke. Die native Stärke kann sowohl aus Früchten oder Samenkörnern, als auch aus Knollen oder Wurzeln stammen. So läßt sich erfindungsgemäß z. B. Weizenstärke, Maisstärke, Kartoffelstärke oder auch Reisstärke einsetzen, Die Stärkederivate, die erfindungsgemäß modifiziert werden können, sind hauptsächlich Ester und Ether oben genannter Stärkearten, sowie oxidierte Stärken. Auch kationisierte Stärke kann eingesetzt werden.

Die Organosilane, die erfindungsgemäß als Modifizierungsmittel eingesetzt werden können, umfassen Alkylalkoxysilane und organofunktionelle Alkoxysilane. Sie lassen sich durch die allgemeine Formel

$$Y-(CH_2)_n-\underset{\underset{(CH_3)_m}{|}}{Si}X_{3-m}$$

kennzeichnen in der Y für eine, ggf. substituierte Aminogruppe oder für einen Rest aus der Gruppe H, $-CH_3$;-Cl; $-CH=CH_2$; -SH,$-O-CH_2-$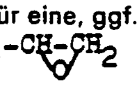

oder $-O-C(O)-C(CH_3)=CH_2$ steht, X ein Alkoxyrest ist mit maximal 6 Atomen der ggf. durch Sauerstoffatome unterbrochen ist, m die Werte 0 oder 1 oder 2 und n die Werte 1 oder 2 oder 3 sowie 0 - für den Fall, daß Y = $-CH=CH_2$ ist - annehmen kann. Als Substituenten für die Aminogruppe kommen $C_1$-$C_8$-Alkylreste, Arylreste, vorzugsweise der Phenylrest, Cycloalkylreste sowie die Gruppe $-CH_2-CH_2NH_2$ in Betracht. Die Aminogruppe kann auch in Form eines quaternären Ammoniumsalzes vorliegen.

Unter die allgemeine Formel fallen Alkylsilane wie Methyltrimethoxysilan, Methyltriethoxysilan, Propyltrimethoxysilan, Butyltrimethoxysilan, Isobutyltrimethoxysilan. Als Beispiele für organofunktionelle Silane seien genannt: Vinyltrimethoxysilan, Vinyltriethoxysilan, Vinylmethyldimethoxysilan, γ-Chlorpropyltrimethoxysilan, γ-Chlorpropylmethyldimethoxysilan, α-Chlormethyldimethylmethoxysilan, γ-Mercaptopropyltrimethoxysilan, γ-Mercaptopropylmethyldimethoxysilan, γ-Aminopropyltrimethoxysilan, γ-Aminopropyltriethoxysilan, γ-Aminopropylmethyldiethoxysilan, γ-Aminoethylaminopropyltrimethoxysilan, γ-Glycidyloxypropyltrimethoxysilan, γ-Methacryloxypropyltrimethoxysilan.

Die Konzentration der Silane in den organischen Lösungsmitteln richtet sich u.a. nach dem Grad der Substitution, der erzielt werden soll und der Verarbeitbarkeit der Suspension der eingesetzten Stärke in dem gewählten Lösungsmittel. Es genügen Konzentrationen zwischen 0,1 und 0,5 Gew.-%; prinzipiell können jedoch auch höhere Konzentrationen eingesetzt werden. Zweckmäßigeirweise wird in dem Lösungsmittel immer diejenige Menge an Silan gelöst, die mit der Stärke reagieren soll und die Menge des Lösungsmittels wird so gewählt, daß es mit der Stärke eine gut verarbeitbare und rührfähige Suspension bildet.

Als Lösungsmittel eignen sich sowohl polare als auch unpolare Lösungsmittel. Einsetzbare polare Lösungsmittel sind z. B. aliphatische und aromatische Kohlenwasserstoffe oder die nicht-brennbaren Chlorkohlenwasserstoffe. Als polare Lösungsmittel eignen sich beispielsweise Alkohole, bevorzugt die der Esterkomponente der Metallsäureester entsprechenden Alkohole.

Die einsetzbaren Metallsäureester umfassen die Ester der Metallsäuren der Elemente der vierten oder fünften Nebengruppe des periodischen Systems der Elemente, hauptsächlich Titan-, Zirkon- und Vanadinsäureester. Die Esterkomponente kann sich sowohl von aliphatischen Alkoholen als auch von, ggf. alkylsubstituierten, Phenolen ableiten; auch gemischte Ester können eingesetzt werden. Zu den erfindungsgemäß einsetzbaren Verbindungen zählen Methyltitanat, Ethyltitanat, Butyltitanat, Butylpolytitanat, Nonyltitanat, Cetyltitanat, Tributylalkyltitanat, Cresyltitanat, Cresylpolytitanat, Propylzirkonat, Butylzirkonat, Ethylvanadat und Butylvanadat.

Auch gemischte Ester können erfindungsgemäß eingesetzt werden, bei denen eine oder mehrere Alkoxygruppen durch einen Komplexbildner, z. B. Acetylaceton, ersetzt sind, wie z. B. beim Diisopropoxy- bis (2,4-Pentandionatol-Titan) (4), das auch unter der Bezeichnung Titanacetylacetonat bekannt ist. Auch andere Acetylacetonate, die keine Estergruppierungen mehr enthalten, lassen sich einsetzen.

Das Verhältnis von Silan; Metallsäureester kann in Weite, Bereichen variiert werden, je nachdem, welche Silane und welche Lösungsmittel eingesetzt werden und wie hoch der gewünschte Substitutionsgrad sein soll. Im allgemeinen liegt dieses Verhältnis zwischen 9 : 1 und 1 : 9; jedoch zeigen auch noch geringere Mengen an bestimmten Metallsäureester die erfindungsgemäße Wirkung.

Die gemäß dem vorliegenden Verfahren modifizierte Stärke wird beim Einsatz von Alkylsilanen und von einigen organofunktionellen Silanen als Modifizierungsmittel von kaltem Wasser nicht benetzt. Sie ist dennoch heißwasserlöslich.

Die erfindungsgemäße modifizierten Stärken zeigen beim Einsatz einer großen Zahl von Organosilan als Modifizierungsmittel eine gute Rieselfähigkeit, die erheblich besser ist als sie durch Zusatz von hochporöser Kieselsäure erreicht wird, während unmodifizierte Stärken praktisch nicht rieselfähig sind. Diese Verbesserung tritt hauptsächlich bei Kartoffelstärke auf, jedoch auch andere Stärkearten zeigen beim Modifizieren mit Alkylsilanen eine verbesserte Rieselfähigkeit.

Die wäßrigen Lösungen der erfindungsgemäß modifizierten Stärken können eine höhere Viskosität als die der reinen Stärken besitzen, die sich jedoch beim Einrühren oder Dispergieren von Füllstoffen nicht nachteilig auswirkt.

Aufgrund der genannten Eigenschaften eignen sich die nach dem erfindungsgemäßen Verfahren hergestellten modifizierte Stärken insbesondere auf solchen Anwendungsgebieten von Stärke, in denen native und die bekannten derivatisierten Stärken die bestehenden Anforderungen nicht voll erfüllen. Beispielhaft seien genannt die Anwendung als Bindemittel für Mineralfasern, als Textilhilfsmittel, als Leimungsmittel für die verschiedenen Papieranwendungen sowie als Füllstoffe für Kunststoffe.

**Beispiel 1**

Es wurde eine Lösung von 0,74 g (= 0,0045 Mol) Propyltrimethoxysilan (PTMO) und 0,185 g (= 0,00054 Mol) Butyltitanat (BTM) monomer in 610 ml Hexan, hergestellt. Das Mengenverhältnis von PTMO zu BTM betrug 80 : 20. Es wurden nun 193,8 g (= 1 Mol) Kartoffelstärke zugegeben und das Gemisch mindestens 30 Minuten, bei Raumtemperatur gerührt. Danach erfolgte eine Standzeit von ca. 20 Stunde, anschließende Filtration und Trocknung der Stärke bei Raumtemperatur. Der Siliciumgehalt der auf diese Weise erhaltenen Stärke betrug 0,036 %, d.h. etwa 46,2 % der angebotenen Silanmenge wurden von der Stärke fixiert. Die silanisierte Stärke wurde einem Benetzungstest unterworfen, bei dem eine Spatelspitze der Stärke auf destilliertes Wasser, das sich in einem Reagenzglas befindet, aufgegeben wurde. Die gesamte Stärkemenge blieb dabei während mindestens 24 Stunden auf dem Wasser liegen. Von einer weiteren Probe wurde die Rieselfähigkeit im Fordbecher bestimmt. Die Probe wurde vor der Bestimmung gesiebt. Die Ausrieselzeit bei Verwendung der 6 mm Düse betrug 33 sec.

Zum Vergleich wurde Kartoffelstärke in der gleichen Weise und mit der gieichen Menge Propyltrimethoxysilan behandelt, jedoch ohne Zugabe von BTM. Die auf diese Weise behandelte Stärke hatte nur einen Siliciumgehalt von 0,017 % (= 21,8 % des angebotenen Silans), wurde jedoch von Wasser vollständig benetzt, d.h. sank im Benetzungstest sofort zu Boden und zeigte überhaupt keine Rieselfähigkeit. Auch ein Versuch mit 9,84 g (= 0,06 Mol) PTMO, ohne Zusatz von Butyltitanat monomer, brachte kein besseres Ergebnis.

**Beispiel 2**

Kartoffelstärke wurde in gleicher Weise wie im Beispiel 1 behandelt; als Lösungsmittel wurde jedoch Perchlorethylen (einmal 610 ml und in einem zweiten Versuch 250 ml) eingesetzt. Zusätzlich wurde nach dem Abfiltrieren und dem Trocknen bei Raumtemperatur zur besseren Ablüftung noch 2 Stunden bei 40°C im Trockenschrank getrocknet. Dies gilt auch für alle folgenden Beispiele, bei denen die Behandlung in Perchlorethylen oder Isopropanol erfolgte.

Die Analysen ergaben die in der folgenden Tabelle genannten Werte.

| | Silanaufnahme pro 100 g Stär | | |
|---|---|---|---|
| | theoretisch<br>% Si | gefunden<br>% Si | % Si der Theorie |
| Versuch in | | | |
| 610 ml Perchlorethylen | 0,078 | 0,042 | 53,8 |
| 250 ml Perchlorethylen | 0,078 | 0,038 | 48,7 |

Beide Proben wurden zusätzlich noch dem Benetzungstest unterworfen. Die gesamte, auf das Wasser aufgebrachte Stärkemenge blieb, während mindestens 24 Stunden, auf dessen Oberfläche liegen.

Auch die Rieselfähigkeit in Fordbecher wurde von beiden Produkten bestimmt. Die Ausrieselzeit betrug bei dem Versuch in 610 ml Lösungsmittel 30 sec. und bei dem in 250 ml 32 sec.

**Beispiel 3**

Die Arbeitsweise der Beispiele 1 und 2 wurde wiederholt, mit dem Unterschied, daß anstelle von Hexan (Beispiel 1) und Perchlorethylen (Beispiel 2) ein polares Lösungsmittel und zwar 610 ml Isopropanol, eingesetzt wurde.
Der Benetzungstest der dabei erhaltenen Stärke fiel wie im Beispiel 1 und 2 aus, die Rieselfähigkeit betrug ca. 30 sec.

**Beispiel 4**

Es wurde analog Beispiel 2 gearbeitet, jedoch das Verhältnis von Propyltrimethoxysilan zu Butyltitanat monomer variiert:
Je 0,74 g (= 0,0045 Mol) Propyltrimethoxysilan wurden in 250 ml Perchlorethylen eingerürt und dann in einem Versuch 0,493 g (= 0,00145 Mol) Butyltitanat monomer zugegeben. Das entspricht einem Mengenverhältnis von PTMO : BTM = 60 : 40.
In einen zweiten Versuch wurden 1,11 g (= 0,00326 Mol) Butyltitanat monomer zu der PTMO-Lösung gegeben. Dieses Mengenverhältnis betrug 40 : 60. Anschließend wurde 1 Mol (= 193,8 g) Kartoffelstärke zugerührt und weiter verfahren wie in den Beispielen 1 und 2 beschrieben. Die Analysenwerte zeigt folgende Tabelle, wobei aus Beispiel 2 die Werte in 250 ml Perchlorethylen mitaufgeführt sind.

| | Silanaufnahme pro 100 g Stärke | | |
|---|---|---|---|
| Mengenverhältnis PTMO : BTM | theoretisch % Si | gefunden % Si | % Si der Theorie |
| 80 : 20 (= Beispiel 2) | 0,078 | 0,038 | 48,7 |
| 60 : 40 | 0,078 | 0,038 | 48,7 |
| 40 : 60 | 0,078 | 0,045 | 57,7 |

Beide Proben wurden auch den Benetzungstest unterworfen. Die gesamte, auf das Wasser aufgebrauchte Stärkenenge, blieb während mindestens 24 Stunden auf dessen Oberfläche liegen. Die Ausrieselzeit betrug bei den Versuch 60 : 40 32 sec. (= wie im Beispiel 2, 80 : 20) bei dem Versuch 40 : 60, 36 sec.

**Beispiel 5**

Es wurde wie in den Beispielen 1 und 2 gearbeitet, mit dem Unterschied, daß anstelle des Propyltrimethoxisilan 0,0045 Mol (= 1,06 g) γ-Glycidyloxipropyl-trimethoxysilan jeweils in 610 ml Hexan und Perchlorethylen gelöst wurden. Der Zusatz an Butyltitanat monomer betrug jeweils 0,265 g (= 0,00078 Mol). Es wurden dann wieder jeweils 1 Mol Kartoffelstärke zugerührt und, wie bereits beschrieben, weiterverfahren.
Die Analysenwerte zeigt folgende Tabelle:

| | Silanaufnahme pro 100 g Stärke | | |
|---|---|---|---|
| Lösungsmittel | theoretisch % Si | gefunden % Si | % Si der Theorie |
| Hexan | 0,078 | 0,035 | 44,9 |
| Perchlorethylen | 0,078 | 0,043 | 55,1 |

Die Rieselfähigkeit lag bei beiden Versuchen zwischen 28 und 30 sec.

**Beispiel 6**

In diesem Beispiel wurden 0,67 g (= 0,0045 Mol) Vinyltrimethoxysilan in 610 ml Hexan eingerührt und entsprechend dem Mengenverhältnis 80 : 20, 0,168 g (= 0,00049 Mol) Butyltitanat monomer und 1 Mol (= 193,8 g) Kartoffelstärke zugegeben.
Beim Benetzungstest blieb die gesamte Probe, der so behandelten Stärke mindestens 24 Stunden auf der Wasseroberfläche liegen und die Ausrieselzeit im Fordbecher betrug ca. 42 sec.

**Beispiel 7**

Es wurden 193,8 g (= 1 Mol) Kartoffelstärke mit 0,995 g (=0,0045 Mol) γ-Aminopropyltriethoxysilan und 0,249 g (0,00073 Mol) Butyltitanat monomer in 250 ml Perchlorethylen analog Beispiel 2 behandelt. Der Siliciumgehalt der auf diese Weise erhaltenen Stärke betrug 0,05 %. Aufgrund der angebotenen Silanmenge liegt der theoretische Si-Gehalt der Stärke bei 0,078 %, so daß etwa 64 % der angebotenen Silan menge von der Stärke fixiert wurde.

Die Ausrieselzeit im Fordbecher mit der 6 mm Düse betrug 33 sec.

**Beispiel 8**

In diesen Versuchen wurde, wie im Beispiel 2, 1 Mol (= 193,8 g) Kartoffelstärke in 610 ml Perchlorethylen behandelt, in dem zuvor 0,74 g (= 0,0045 Mol) Propyltrimethoxysilan und als Metallsäureester in einem Versuch 0,247 g (= 0 00051 Mol) Titanacetylacetonat (= 75 %ig) in einem zweiten Versuch 0,226 g (= 0,00048 Mol) Zirkonbutylat (= 82 %ig) gelöst waren.

Proben der so behandelten Stärken blieben im Benetzungstest vollständig auf der Wasseroberfläche liegen. Die Ausrieselzeiten dieser Stärken betrugen 29 bzw 32 sec.

**Beispiel 9**

Es wurde wie im Beispiel 1 gearbeitet, mit dem Unterschied, daß 1 Mol (= 182 g) Maisstärke, anstelle der Kartoffelstärke eingesetzt wurde. Die Behandlung erfolgte in 610 ml Perchlorethylen, in dem 0,74 g (= 0,0045 Mol) Propyltrimethoxysilan und 0,185 g (= 0,00054 Mol) Butyltitanat monomer gelöst worden waren.

Auch hier ergab der Benetzungstest, daß im Verlauf von mindestens 24 Stunden praktisch keine Benetzung Statt fand und die so behandelte Stärke nach dem Aufbringen auf Wasser nicht zu Boden sank.

**Beispiel 10**

In diesen Versuchen wurde wie im Beispiel 9 gearbeitet, aber anstelle der Maisstärke kam sowohl 1 Mol (= 202,5 g) Hydroxypropylether von oxidierter Kartoffelstärke als auch 1 Mol (= 184 g) wasserlöslicher nichtionoger Stärkeether zum Einsatz. Beide Proben der so behandelten Stärken blieben im Benetzungstest vollständig auf der Wasseroberfläche liegen. Die Ausrieselzeiten im Fordbecher mit der 6 mm Düse betrugen bei dem Hydroxypropylether 29 sec., bei den Stärkeether 45 sec.

**Patentansprüche**

1. Verfahren zur Modifizierung von Stärke mit organofunktionellen Silanen, dadurch gekennzeichnet, daß man in einem organischen Lösungsmittel die Stärke in innigen Kontakt mit dem organofunktionellen Silan in Gegenwart einer solchen Menge eines Metallsäureesters von Metallen der IV. und V. Nebengruppe des Periodischen Systems der Elemente bringt, daß das Molverhältnis des organofunktionellen Silans zu den Metallsäureester zwischen 1 : 9 und 9 : 1 beträgt.

2. Verfahren gemäß Anspruch 1, dadurch gekennzeichnet, daß man das organofunktionelle Silan und den Metallsäureester in dem organischen Lösungsmittel löst, in dieser Lösung die Stärke suspendiert und die erhaltene Suspension bei Raumtemperatur rührt.

**Claims**

1. Process for the modification of starch with organofunctional silanes, characterised in that the starch is brought into intimate contact with the organofunctional silane in an organic solvent in the presence of such an amount of a metal acid ester of metals of the IVth and Vth sub-groups of the periodic system of the elements that the molar ratio of the organofunctional silane to the metal acid ester amounts to between 1 : 9 and 9 : 1.

2. Process according to claim 1, characterised in that the organofunctional silane and the metal acid ester are dissolved in the organic solvent, the starch is suspended in this solution and the suspension obtained is stirred at room temperature.

**Revendications**

1. Procédé en vue de modifier l'amidon avec des silanes organofonctionnels, caractérisé en ce qu'on met l'amidon, en solution dans un solvant organique, en contact intime avec le silane organofonctionnel en présence d'un ester d'acide métallique des métaux du 4e et du 5e sous-groupe du Système Périodique des Eléments, en une quantité calculée de telle sorte que le rapport molaire du silane organofonctionnel à l'ester d'acide métallique se situe entre 1 : 9 et 9 : 1.

2. Procédé selon la revendication 1, caractérisé en ce qu'on dissout le silane organofonctionnel et l'ester d'acide métallique dans le solvant organique, on met l'amidon en suspension dans la solution ainsi obtenue et on agite la suspension formée à la température ambiante.